# DEMANDE DE BREVET EUROPEEN

(11) **EP 1 986 339 A1**
(43) Date de publication de la demande: **29.10.2008**
(21) Numéro de dépôt: 07290511.0
(22) Date de dépôt: 25.04.2007
(51) Int. Cl.: H04B 5/00, H04B 7/26

(54) **Dispositif repeteur de signaux rf par couplage electromagnetique**

(71) Demandeur: Alcatel Lucent, 75008 Paris (FR)
(72) Inventeur: Lucidarme, Thierry, 78180 Montigny le Bretonneux (FR)
(74) Mandataire: Ameline, Jean-Paul B.C.

(57) **Abrégé**

Un dispositif (D) est destiné à répéter des signaux radiofréquences (RF) devant être échangés entre une station (SB) d'un réseau de communication radio et un terminal de communication (TC) situé dans un espace entouré de parois (PA). Ce dispositif (D) comprend un répéteur externe (RE) destiné à être placé sur la face externe (FE) d'une paroi (PA) et comprenant des premiers moyens de couplage électromagnétique (C1) couplés à des premiers moyens d'émission et/ou de réception de signaux RF (M1), et un répéteur interne (RI) destiné à être placé sur la face interne (FI) de cette même paroi (PA) sensiblement en face du répéteur externe (RE) et comprenant des seconds moyens de couplage électromagnétique (C2) couplés à des seconds moyens d'émission et/ou de réception de signaux RF (M2). Les premiers (C1) et seconds (C2) moyens de couplage électromagnétique sont agencés de manière à se transférer par voie d'ondes, au travers de la paroi (PA), des signaux RF provenant respectivement des premiers (M1) et seconds (M2) moyens d'émission et/ou de réception de signaux RF.

## Description

L'invention concerne le domaine de la répétition de signaux radiofréquences (RF), et plus précisément, les dispositifs qui sont chargés de répéter des signaux RF devant être échangés entre une station (éventuellement de base (ou équivalent)) d'un réseau de communication radio et un terminal de communication situé dans un espace entouré de parois tel qu'un bâtiment ou un véhicule.

On entend ici par « réseau de communication radio » tout type de réseau radio (ou sans fil) cellulaire, ou apparenté, et notamment les réseaux de types GSM, UMTS (3GPP), CDMA, CDMA 2000 (3GPP2), FDD (« Frequency Division Duplex »), TDD (« Time Division Duplex »), WiMAX, evolved-UTRAN (également appelé LTE (« Long Term Evolution »)), ainsi que de façon non restrictive certains réseaux locaux de type FWA (pour « fixed wireless access ») de moindre mobilité.

Par ailleurs, on entend ici par « terminal de communication » tout type de terminal de communication fixe ou mobile (ou portable) capable d'échanger des données avec un autre terminal de communication ou avec un équipement de réseau, par voie filaire ou par voie d'ondes. Par conséquent, il pourra par exemple s'agir d'un téléphone ou ordinateur fixe connecté à un serveur ou routeur local muni d'une interface de communication radio, d'un téléphone mobile, d'un ordinateur portable ou assistant numérique personnel (ou PDA) muni d'une interface de communication radio, d'un serveur ou routeur local muni d'une interface de communication radio, d'un récepteur radio hautes fréquences ou d'un récepteur de télévision terrestre ou satellitaire.

L'échange de signaux RF entre une station (éventuellement de base (ou équivalent)) et un terminal (de communication) situé à l'intérieur d'un espace entouré de parois est souvent difficile en raison de l'atténuation de leur intensité induite notamment par la traversée de cloison(s) et/ou la présence d'objet(s) (notion d'ombre) et/ou l'angle d'incidence desdits signaux RF par rapport à une cloison. Ainsi, des atténuations de 30 à 40 dB peuvent fréquemment survenir, notamment dans certaines parties de bâtiments.

Cette atténuation perturbe déjà, voire rend parfois impossible, certaines conversations téléphoniques (transmission de données de voix). Mais, elle est encore plus gênante pour les communications à haut débit, comme par exemple celles utilisées pour transférer des données (ou « data »), éventuellement multimédia en haut débit (qui nécessitent l'utilisation d'une modulation d'ordre plus élevée et donc d'un rapport signal à bruit élevé).

Afin d'améliorer la situation, on peut par exemple implanter dans les bâtiments ou véhicules des stations de base miniaturisées (« micro BTS » ou « femto BTS »), voire même des routeurs-stations de base (ou BSRs, pour « Base Station Routers ») qui disposent d'une interface IP (« Internet Protocol ») vers le réseau. Mais cette solution s'avère malgré tout onéreuse en raison des coûts d'installation et de maintenance des équipements et des câblages. En outre, elle entraîne une éventuelle augmentation du nombre, ou une redistribution, des points de concentration et de gestion de la capacité dans le réseau que sont les contrôleurs de stations de base (appelés RNCs dans le cas d'un réseau UMTS).

Il est également possible de placer un répéteur à l'extérieur d'un bâtiment ou véhicule. C'est notamment ce qui est proposé dans les documents brevet WO 03/058850 et US 6,731,904.

Plus précisément, le document brevet WO 03/058850 propose d'installer à l'extérieur d'un bâtiment un répéteur chargé de collecter les signaux RF descendants (ou « downlink »), respectivement montants (ou « uplink »), et de les retransmettre (toujours sous forme de signaux RF) en direction de l'intérieur du bâtiment, respectivement vers une station de base, au moyen d'une antenne à grand gain, c'est-à-dire avec un réflecteur. Cette solution permet de s'affranchir de la plupart des causes qui sont à l'origine des atténuations, mais elle s'avère également onéreuse, encombrante et inesthétique du fait de l'utilisation d'un réflecteur à grand gain.

Le document brevet US 6,731,904 propose d'installer à une certaine distance d'un bâtiment un répéteur chargé de collecter les signaux RF descendants (ou « downlink »), respectivement montants (ou « uplink »), et de les retransmettre à 180° (toujours sous forme de signaux RF), après les avoir amplifiés, en direction du bâtiment, respectivement vers une station de base. Cette solution ne permet de s'affranchir que d'une partie des causes qui sont à l'origine des atténuations.

Aucune solution connue n'apportant une entière satisfaction, l'invention a donc pour but d'améliorer la situation.

Elle propose à cet effet un dispositif chargé de répéter des signaux radiofréquences (RF) devant être échangés entre une station (éventuellement de base (ou équivalent)) d'un réseau de communication radio et un terminal de communication qui est situé dans un espace entouré de parois (bâtiment ou véhicule).

Ce dispositif répéteur se caractérise par le fait qu'il comprend :
- un répéteur externe destiné à être placé sur la face externe d'une paroi et comprenant des premiers moyens de couplage électromagnétique couplés à des premiers moyens d'émission et/ou de réception de signaux RF, et
- un répéteur interne destiné à être placé sur la face interne de cette même paroi sensiblement en face du répéteur externe, et comprenant des seconds moyens de couplage électromagnétique couplés à des seconds moyens d'émission et/ou de réception de signaux RF,
- ces premiers et seconds moyens de couplage électromagnétique étant agencés de manière à se transférer par voie d'ondes, au travers de la paroi, des signaux RF provenant respectivement des premiers et seconds moyens d'émission et/ou de réception de signaux RF.

Le dispositif répéteur selon l'invention peut comporter d'autres caractéristiques qui peuvent être prises séparément ou en combinaison, et notamment :
- ses premiers et seconds moyens de couplage électromagnétique peuvent par exemple être agencés sous la forme d'antennes RF sensibles au champ électrique ;
   ➢ dans ce cas, les antennes RF peuvent par exemple être choisies parmi les antennes de type monopôle, les antennes de type dipôle et les antennes de type microstrip ;
- dans une première variante, ses premiers et seconds moyens de couplage électromagnétique peuvent par exemple être agencés sous la forme d'antennes sensibles au champ magnétique ;
- dans une seconde variante, ses premiers et seconds moyens de couplage électromagnétique peuvent par exemple être agencés sous la forme d'émetteurs et/ou de récepteurs de signaux optiques ;
- son répéteur externe peut comprendre des premiers moyens d'alimentation électrique, et son répéteur interne peut comprendre des seconds moyens d'alimentation électrique connectés à une source de courant alternatif et propres à transférer de l'énergie d'alimentation aux premiers moyens d'alimentation électrique, par couplage inductif ;
   ➢ les seconds moyens d'alimentation électrique peuvent comprendre un enroulement primaire de spires connecté à un circuit d'alimentation en courant alternatif, et les premiers moyens d'alimentation électrique peuvent comprendre un enroulement secondaire de spires destiné à être placé en face de l'enroulement primaire et connecté à un circuit de chargement électrique chargé de délivrer un courant alternatif ;
      o l'enroulement primaire peut par exemple présenter un diamètre inférieur à celui de l'enroulement secondaire ;
      o en variante ou en complément, les premiers et/ou seconds moyens d'alimentation électrique peuvent par exemple comprendre des moyens de concentration de flux ;
      o en variante ou en complément, les seconds moyens d'alimentation électrique peuvent par exemple comprendre des moyens de conversion chargés de convertir le courant alternatif qui présente une première fréquence en un courant alternatif qui présente une seconde fréquence supérieure à la première fréquence ;
      o en variante ou en complément, les seconds moyens d'alimentation électrique peuvent par exemple comprendre un nombre élevé de spires ;
- en variante, son répéteur externe peut par exemple comprendre des premiers moyens d'alimentation électrique autonomes ;
   ➢ dans ce cas les premiers moyens d'alimentation électrique peuvent par exemple comprendre une cellule solaire et un circuit de chargement électrique connecté à la (aux) cellule(s) solaire(s) et chargé de délivrer un courant continu ;
- les premiers moyens d'alimentation électrique peuvent par exemple comprendre une batterie connectée au circuit de chargement électrique ;
- les premiers et/ou seconds moyens d'alimentation électrique peuvent par exemple comprendre des moyens de conversion chargés de convertir un courant alternatif en un courant continu (pour alimenter un circuit de filtrage et d'amplification) ;
- son répéteur externe peut comprendre des premiers moyens de conversion de fréquence chargés de convertir une première fréquence présentée par les signaux RF reçus par les premiers moyens d'émission et/ou de réception en une troisième fréquence avant de communiquer ces signaux RF aux premiers moyens de couplage électromagnétique. Dans ce cas, son répéteur interne comprend des seconds moyens de conversion de fréquence chargés de convertir la troisième fréquence présentée par les signaux RF transférés aux seconds moyens de couplage électromagnétique, via les premiers moyens de couplage électromagnétique, pour la ramener à la première fréquence avant de les communiquer aux seconds moyens d'émission et/ou de réception ;
- son répéteur interne peut comprendre des premiers moyens de conversion de fréquence chargés de convertir une deuxième fréquence présentée par les signaux RF reçus par les seconds moyens d'émission et/ou de réception en une quatrième fréquence avant de communiquer ces signaux RF aux seconds moyens de couplage électromagnétique. Dans ce cas, son répéteur externe comprend des seconds moyens de conversion de fréquence chargés de convertir la quatrième fréquence présentée par les signaux RF transférés aux premiers moyens de couplage électromagnétique, via les seconds moyens de couplage électromagnétique, pour la ramener à la deuxième fréquence avant de les communiquer aux premiers moyens d'émission et/ou de réception.

L'invention est particulièrement bien adaptée, bien que de façon non exclusive, aux réseaux cellulaires (ou mobiles), et plus généralement à toute application nécessitant la couverture de l'intérieur d'un espace clos fixe (bâtiment) ou mobile (notamment un véhicule) par une forme d'onde qui est générée par un émetteur qui est situé à l'extérieur dudit espace clos, comme par exemple une station de base cellulaire, un satellite, un émetteur (ou station) radio ou un émetteur (ou station) de télévision terrestre ou satellitaire.

D'autres caractéristiques et avantages de l'invention apparaîtront à l'examen de la description détaillée ci-après, et des dessins annexés, sur lesquels :
- la figure 1 illustre de façon très schématique et fonctionnelle un exemple de réalisation d'un dispositif répéteur selon l'invention, installé sur une paroi d'un bâtiment,
- la figure 2 illustre de façon très schématique, dans une vue en perspective, un premier exemple de réalisation d'un dispositif répéteur selon l'invention dans lequel les répéteurs externe et interne comportent des moyens d'émission/réception de signaux RF de type antenne monopôle respectivement sur des faces supérieure et inférieure et à la fois des moyens de couplage RF de type antenne microstrip et des moyens d'alimentation électrique à couplage inductif sur une face latérale,
- la figure 3 illustre de façon très schématique, dans une vue en coupe, l'exemple de réalisation du dispositif répéteur de la figure 2, installé sur une paroi,
- la figure 4 illustre de façon très schématique, dans une vue en coupe, une variante de l'exemple de réalisation du dispositif répéteur des figures 2 et 3, installé sur une paroi,
- la figure 5 illustre de façon très schématique et fonctionnelle un exemple de réalisation de moyens d'alimentation électrique à couplage inductif par enroulements primaire et secondaire,
- la figure 6 illustre de façon très schématique, dans une vue en coupe, une autre variante de réalisation du dispositif répéteur illustré sur les figures 2 et 3, dans laquelle les moyens d'alimentation électrique à couplage inductif comprennent des moyens de concentration de flux,
- la figure 7 illustre de façon très schématique et fonctionnelle un autre exemple de réalisation d'un dispositif répéteur selon l'invention, à transposition de fréquences, installé sur une paroi d'un bâtiment.

Les dessins annexés pourront non seulement servir à compléter l'invention, mais aussi contribuer à sa définition, le cas échéant.

L'invention a pour objet de permettre la répétition de signaux radiofréquences (RF), entre une station (éventuellement de base (ou équivalent)) d'un réseau de communication radio et un terminal de communication qui est situé dans un espace entouré de parois, tel qu'un bâtiment ou un véhicule, au moyen d'un dispositif répéteur de coût réduit et/ou de faible encombrement.

Dans ce qui suit, on considère à titre d'exemple non limitatif que le réseau de communication radio est un réseau cellulaire de type UMTS (ou équivalent). Mais, l'invention n'est pas limitée à ce type de réseau radio. Elle concerne en effet tout type de réseau radio (ou sans fil) cellulaire, ou apparenté, et notamment les réseaux de types GSM, CDMA, CDMA 2000, FDD, TDD, WiMAX, evolved-UTRAN (ou LTE). D'une manière générale, l'invention concerne toute application nécessitant la couverture de l'intérieur d'un espace clos fixe (bâtiment) ou mobile (notamment un véhicule) par une forme d'onde qui est générée par un émetteur (ou station) qui est situé(e) à l'extérieur dudit espace clos, comme par exemple une station de base cellulaire, un satellite, un émetteur radio ou un émetteur de télévision terrestre ou satellitaire.

Par ailleurs, on considère dans ce qui suit, à titre d'exemple non limitatif, que les terminaux de communication sont implantés dans un bâtiment (immeuble, maison ou analogue) et sont des téléphones mobiles. Mais, l'invention n'est limitée ni à ce type d'espace entouré de parois, ni à ce type de terminal de communication. Elle concerne en effet également les véhicules de transport, comme par exemple les véhicules automobiles (voitures, camions, bus, cars et caravanes), les bateaux, les trains, les métropolitains, les tramways et les avions, notamment. Elle concerne en outre tout type de terminal de communication fixe ou mobile (ou portable) capable d'échanger des données avec un autre terminal de communication ou avec un équipement de réseau, par voie filaire ou par voie d'ondes, et notamment les téléphones ou ordinateurs fixes connectés à un serveur ou routeur local muni d'une interface de communication radio, les ordinateurs portables et les assistants numériques personnels (ou PDAs) munis d'une interface de communication radio, les serveurs ou routeurs locaux munis d'une interface de communication radio, les récepteurs de télévision terrestres ou satellites, et les récepteurs radio à hautes fréquences.

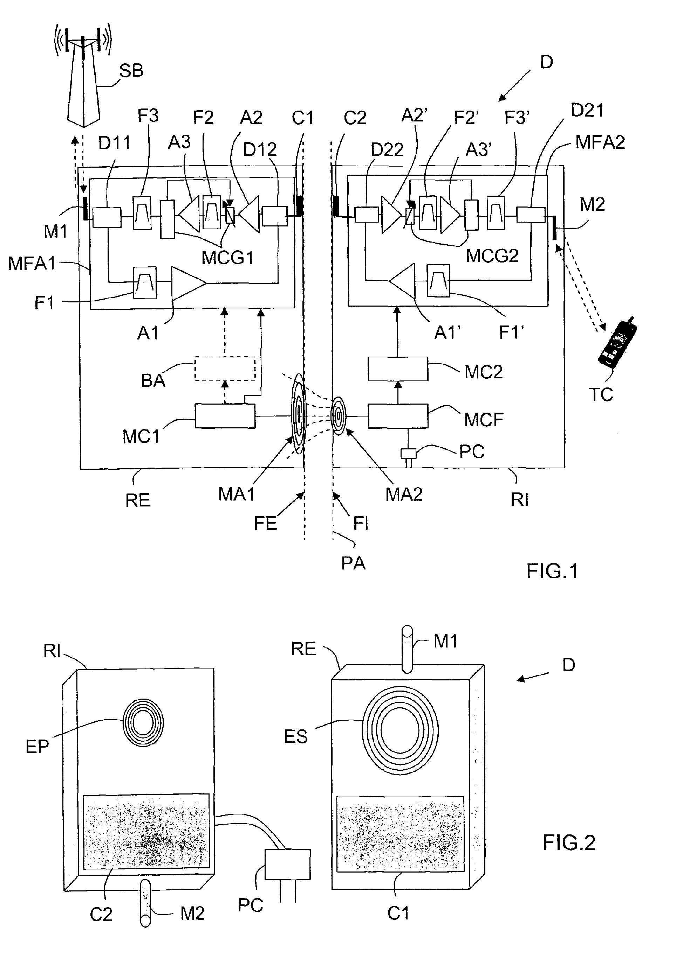

Comme cela est schématiquement, fonctionnellement et non limitativement illustré sur la figure 1, un dispositif répéteur D selon l'invention comprend un répéteur externe RE et un répéteur interne RI.

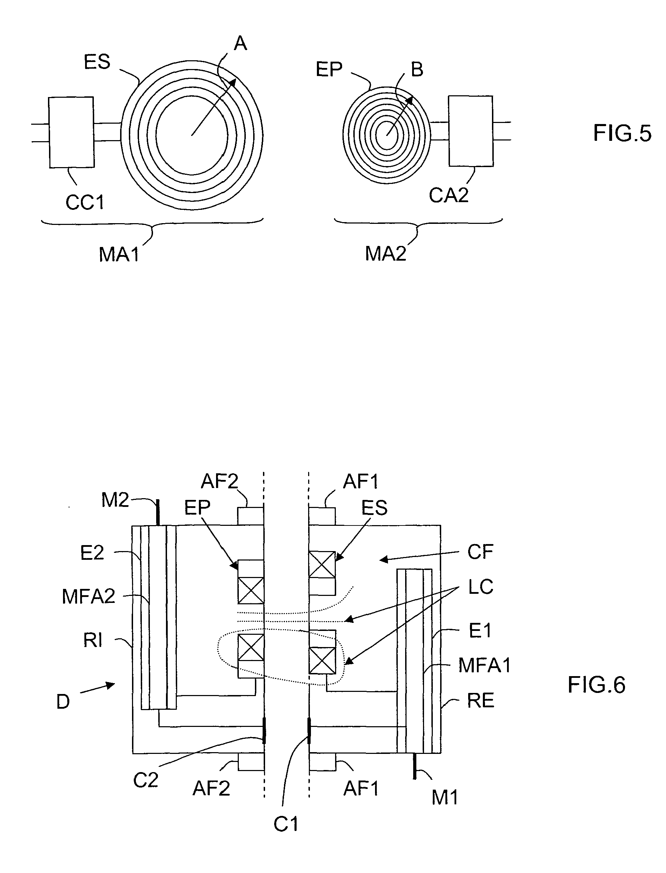

Le répéteur externe RE est destiné à être placé sur la face externe FE de la paroi PA d'un bâtiment (ou d'un véhicule) comme par exemple une vitre ou un mur. Tout type de fixation peut être envisagé, et notamment le collage par effet « ventouse » ou au moyen d'un adhésif, la fixation au moyen d'aimants AF1 (voir figure 6), ou le vissage.

Ce répéteur externe RE comprend des premiers moyens de couplage électromagnétique C1 qui sont couplés à des premiers moyens d'émission et/ou de réception de signaux RF M1. Ces derniers (M1) sont dans l'exemple illustré de type émetteur et récepteur. Ils sont chargés de recevoir les signaux RF qui sont transmis par une station de base (ou équivalent) SB, généralement désignée par l'acronyme anglais BTS, d'un réseau radio (ici cellulaire) et d'émettre à destination de cette station de base SB les signaux RF qui lui sont transmis par les premiers moyens de couplage électromagnétique C1 et qui proviennent des terminaux de communication TC situés dans le bâtiment (via le répéteur interne RI). A cet effet, ils peuvent comporter tout type d'antenne adapté à l'application visée, comme par exemple une antenne de type monopôle (comme c'est le cas dans l'exemple de la figure 1), ou de type dipôle, ou encore de type microstrip plus directive (classiquement le gain d'une antenne de type pavé (ou « patch ») est d'environ 6 dB).

Le répéteur interne RI est destiné à être placé sur la face interne FI de la paroi PA sensiblement en face du répéteur externe RE. De nouveau, tout type de fixation peut être envisagé, et notamment le collage par effet « ventouse » ou au moyen d'un adhésif, la fixation au moyen d'aimants AF2 (voir figure 6), ou le vissage.

Ce répéteur interne RI comprend des seconds moyens de couplage électromagnétique C2 qui sont couplés à des seconds moyens d'émission et/ou de réception de signaux RF M2. Ces derniers (M2) sont dans l'exemple illustré de type émetteur et récepteur. Ils sont chargés de recevoir les signaux RF qui sont transmis par les terminaux de communication TC qui sont situés dans le bâtiment et d'émettre (par voie d'ondes) à destination de ces terminaux de communication TC les signaux RF qui lui sont transmis par les seconds moyens de couplage électromagnétique C2 et qui proviennent de la station de base SB (via le répéteur externe RE). A cet effet, ils peuvent comporter tout type d'antenne adapté à l'application visée, comme par exemple une antenne de type monopôle (comme c'est le cas dans l'exemple de la figure 1), ou de type dipôle, ou encore de type microstrip plus directive.

Les premiers C1 et seconds C2 moyens de couplage électromagnétique sont agencés de manière à se transférer par voie d'ondes, au travers de la paroi PA qui les sépare, les signaux RF qui proviennent respectivement des premiers M1 et seconds M2 moyens d'émission/réception de signaux RF.

De nombreux types de transfert de signaux RF peuvent être envisagés.

Ainsi, le transfert peut se faire par couplage électrique. Dans ce cas, les premiers C1 et seconds C2 moyens de couplage électromagnétique sont des antennes RF qui sont sensibles au champ électrique, comme par exemple des antennes de type microstrip (comme illustré sur les figures 1 à 4, 6 et 7), ou des antennes de type monopôle, ou encore des antennes de type dipôle.

Lorsque l'on utilise des antennes RF C1 et C2 de type microstrip (voir figures 1 à 4, 6 et 7), elles doivent être placées sensiblement en face l'une de l'autre contre les (ou à faible distance des) faces externe FE et interne FI de la paroi PA. On notera que ces antennes RF C1 et C2 de type microstrip doivent être installées dans des parties de leurs répéteurs externe RE et interne RI respectifs qui sont distantes de celles dans lesquelles sont implantés les moyens d'émission/réception RF M1 et M2, de manière à ne pas perturber ou être perturbées par ces derniers.

Il faut en effet éviter que le signal qui est réémis (ou répété) perturbe le signal qui est reçu faiblement. En d'autres termes il faut éviter les perturbations mutuelles des moyens d'émission et/ou de réception RF M1 et M2, les perturbations des premiers moyens d'émission et/ou de réception RF M1 par les premiers moyens de couplage électromagnétique C1 (et réciproquement), et les perturbations des seconds moyens d'émission et/ou de réception RF M2 par les seconds moyens de couplage électromagnétique C2 (et réciproquement). C'est pourquoi il est actuellement préféré d'utiliser des antennes microstrip hémisphériques tant pour les moyens d'émission et/ou de réception RF M1 et M2 que pour les moyens de couplage électromagnétique C1 et C2.

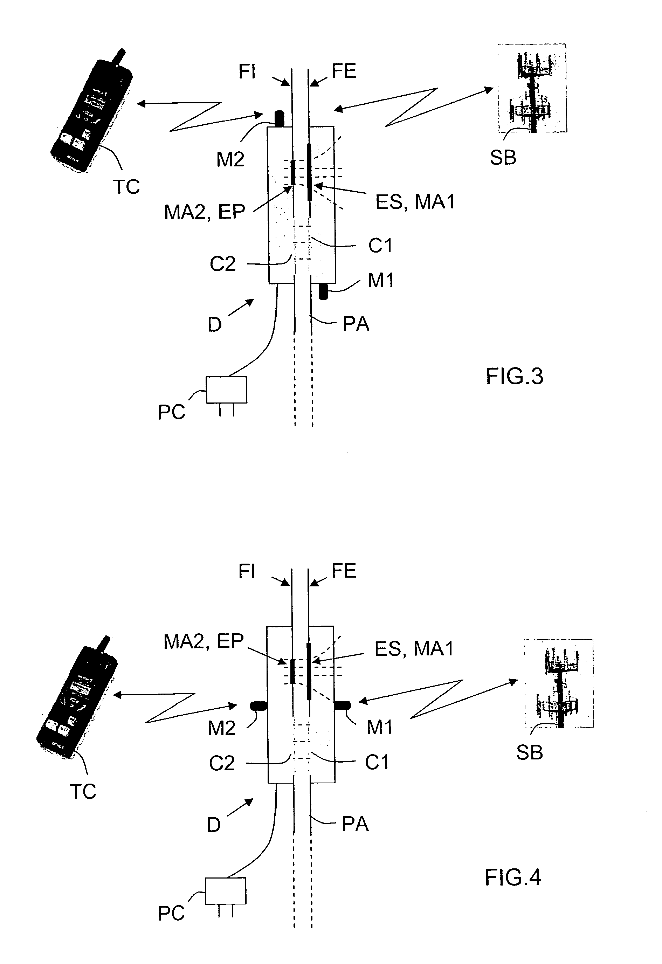

Si les moyens d'émission/réception RF M1 et M2 sont également des antennes RF de type microstrip, ce qui est le mode de réalisation actuellement préféré, on installe ces dernières sur des parties opposées de sorte qu'elles agissent dans des directions diamétralement opposées. Maintenant, si les moyens d'émission/réception RF M1 et M2 sont des antennes RF de type monopôle, il est préférable (comme illustré sur les figures 1 à 3, 6 et 7) d'installer ces dernières (M1 et M2) sur des faces sensiblement perpendiculaires à la paroi PA des boîtiers de leurs répéteurs externe RE et interne RI respectifs, par exemple l'une en position supérieure et l'autre en position inférieure (c'est-à-dire tête-bêche) de façon à pouvoir bénéficier de l'isolation radioélectrique induite par le cône mort de rayonnement de l'antenne monopôle, tandis que l'on place les antennes RF microstrip C1 et C2 sur (ou au voisinage) des faces des boîtiers qui sont parallèles à et en regard de la paroi PA, de sorte qu'elles agissent à des niveaux différents. Mais, dans une variante, et comme illustré sur la figure 4, on peut également placer les antennes RF de type monopôle M1 et M2 sur des faces opposées, parallèles à la paroi PA, des boîtiers de leurs répéteurs externe RE et interne RI respectifs (et donc perpendiculairement à la paroi PA) afin de bénéficier de l'effet d'isolation radioélectrique induit par les cônes morts de rayonnement.

Dans une première variante, le transfert peut se faire par couplage magnétique. Dans ce cas, les premiers C1 et seconds C2 moyens de couplage électromagnétique sont des antennes qui sont sensibles au champ magnétique, comme par exemple des antennes en forme de cadre ou de boucle.

Lorsque l'on utilise des antennes C1 et C2 en forme de cadre ou de boucle, elles doivent être placées sensiblement en face l'une de l'autre contre les (ou à faible distance des) faces externe FE et interne FI de la paroi PA. On notera que ces antennes C1 et C2 en forme de cadre ou de boucle doivent être installées dans des parties de leurs répéteurs externe RE et interne RI respectifs qui sont distantes de celles dans lesquelles sont implantés les moyens d'émission/réception RF M1 et M2, de manière à ne pas perturber ou être perturbées par ces derniers. Ainsi, si les moyens d'émission et/ou de réception RF M1 et M2 sont des antennes RF de type monopôle, on installe ces dernières sur des faces perpendiculaires à la paroi PA (par exemple en positions respectivement supérieure et inférieure (ou inversement)) des boîtiers de leurs répéteurs externe RE et interne RI respectifs, tandis que l'on place les antennes en boucle ou en cadre C1 et C2 sur (ou au voisinage) des faces des boîtiers qui sont parallèles à et en regard de la paroi PA, de sorte qu'elles agissent à des niveaux différents.

Dans une seconde variante, le transfert peut se faire par couplage optique. Dans ce cas, les premiers C1 et seconds C2 moyens de couplage électromagnétique peuvent par exemple être des émetteurs et/ou des récepteurs de signaux optiques. Par exemple la partie dédiée à l'émission peut comporter une diode électroluminescente. En d'autres termes, les signaux optiques à transférer sont convertis en signaux optiques par l'émetteur/récepteur du répéteur externe RE, respectivement interne RI, et ces signaux optiques sont émis en direction de l'émetteur/récepteur du répéteur interne RI, respectivement externe RE où ils sont reconvertis en signaux RF.

On notera, comme cela est illustré sur les figures 1, 6 et 7, que les premiers M1, respectivement seconds M2, moyens d'émission et/ou de réception RF, sont couplés aux premiers C1, respectivement seconds C2, moyens de couplage électromagnétique par un module de filtrage et d'amplification MFA1 ou MFA2.

A titre d'exemple illustratif et non limitatif, et comme illustré sur la figure 1, dans le cas d'un réseau radio de type FDD, chaque module de filtrage et d'amplification MFA1 (ou MFA2) peut comporter deux branches de traitement dédiées respectivement aux transmissions montantes et descendantes selon deux fréquences différentes (par exemple 2,140 GHz en transmission descendante (ou downlink) et 1,950 GHz en transmission montante (ou uplink)). Les extrémités opposées de ces deux branches sont connectées à des duplexeurs D11 et D12 (ou D21 et D22) qui sont eux-mêmes connectés respectivement aux premiers M1 (ou seconds M2) moyens d'émission/réception RF et aux premiers C1 (ou seconds C2) moyens de couplage électromagnétique.

Par exemple, la branche dédiée aux transmissions descendantes au sein du module de filtrage et d'amplification MFA1 du répéteur externe RE peut comprendre un premier filtre passe bande F1, connecté à une sortie du duplexeur D11, et un premier amplificateur A1 dont l'entrée est connectée à la sortie du premier filtre passe bande F1 et la sortie est connectée à une entrée du duplexeur D12.

Par exemple, la branche dédiée aux transmissions montantes au sein du module de filtrage et d'amplification MFA1 du répéteur externe RE peut comprendre :
- un second amplificateur A2 dont l'entrée est connectée à une sortie du duplexeur D12,
- un variateur de gain, d'un module de contrôle de gain automatique (ou AGC) MCG1, dont l'entrée est connectée à la sortie du second amplificateur A2,
- un second filtre passe bande F2 dont l'entrée est connectée à la sortie du variateur de gain MCG1,
- un troisième amplificateur A3 dont l'entrée est connectée à la sortie du second filtre passe bande F2,
- un contrôleur de gain, du module de contrôle de gain automatique (ou AGC) MCG1, dont l'entrée est connectée à la sortie du troisième amplificateur A3,
- un troisième filtre passe bande F3 dont l'entrée est connectée à la sortie du contrôleur de gain MCG1 et la sortie est connectée à une entrée du duplexeur D11.

On notera que le module de contrôle de gain automatique (ou AGC) MCG1 est destiné à lisser les variations dynamiques d'atténuations, par exemple comprises entre environ 30 et 80 dB.

Par exemple, la branche dédiée aux transmissions montantes au sein du module de filtrage et d'amplification MFA2 du répéteur interne RI peut comprendre un premier filtre passe bande F1', connecté à une sortie du duplexeur D21, et un premier amplificateur A1' dont l'entrée est connectée à la sortie du premier filtre passe bande F1' et la sortie est connectée à une entrée du duplexeur D22.

Par exemple, la branche dédiée aux transmissions descendantes au sein du module de filtrage et d'amplification MFA2 du répéteur interne RI peut comprendre :
- un second amplificateur A2' dont l'entrée est connectée à une sortie du duplexeur D22,
- un variateur de gain, d'un module de contrôle de gain automatique (ou AGC) MCG2, dont l'entrée est connectée à la sortie du second amplificateur A2',
- un second filtre passe bande F2' dont l'entrée est connectée à la sortie du variateur de gain MCG2,
- un troisième amplificateur A3' dont l'entrée est connectée à la sortie du second filtre passe bande F2',
- un contrôleur de gain, du module de contrôle de gain automatique (ou AGC) MCG2, dont l'entrée est connectée à la sortie du troisième amplificateur A3',
- un troisième filtre passe bande F3' dont l'entrée est connectée à la sortie du contrôleur de gain MCG2 et la sortie est connectée à une entrée du duplexeur D21.

On notera que le module de contrôle de gain automatique (ou AGC) MCG2 est destiné à lisser les variations dynamiques d'atténuations, par exemple comprises entre environ 30 et 80 dB.

Afin de pouvoir fonctionner, et comme illustré sur les figures 1 à 7, le répéteur externe RE et le répéteur interne RI comprennent respectivement des premiers MA1 et seconds MA2 moyens d'alimentation électrique.

Par exemple, le répéteur interne RI peut comprendre des seconds moyens d'alimentation électrique MA2 destinés à être connectés à une source de courant alternatif. Cette source peut être directement le secteur et dans ce cas, les seconds moyens d'alimentation électrique MA2 sont connectés au secteur par l'intermédiaire d'un connecteur électrique PC. Mais dans une variante illustrée sur la figure 1 et sur laquelle on reviendra plus loin, les seconds moyens d'alimentation électrique MA2 peuvent être connectés à un module de conversion de fréquence MCF chargé de convertir le courant alternatif du secteur, qui présente une première fréquence, en un courant alternatif qui présente une seconde fréquence supérieure à la première fréquence. Dans cette variante, c'est le module de conversion de fréquence MCF qui est connecté au secteur par l'intermédiaire d'un connecteur électrique PC.

Par ailleurs, on notera que le module de filtrage et d'amplification MFA2 du répéteur interne RI nécessite un courant continu. Par conséquent, et comme illustré sur la figure 1, le répéteur interne RI comprend par exemple un module de conversion MC2 chargé de convertir une partie du courant alternatif, issu du secteur ou du module de conversion de fréquence MCF, en un courant continu destiné à alimenter au moins son module de filtrage et d'amplification MFA2.

Le courant électrique qui alimente le répéteur externe RE peut avoir une origine locale ou externe. Par exemple, le répéteur externe RE peut comprendre des premiers moyens d'alimentation électrique MA1 comportant une cellule solaire et un circuit de chargement électrique connecté à la (aux) cellule(s) solaire(s). Ce circuit de chargement électrique peut être éventuellement connecté à une batterie destinée à fournir le courant continu au moins en l'absence de soleil. Les cellules solaires peuvent par exemple être du type de celles qui sont fabriquées par la société Solems.

Dans une variante particulièrement avantageuse, illustrée sur les figures 1 à 7, le répéteur externe RE peut être alimenté en courant par le répéteur interne RI. Par exemple, les seconds moyens d'alimentation électrique MA2 peuvent être agencés de manière à transférer de l'énergie d'alimentation aux premiers moyens d'alimentation électrique MA1, par couplage inductif.

Dans ce cas, et comme illustré sur la figure 5, les seconds moyens d'alimentation électrique MA2 peuvent par exemple comprendre un enroulement primaire de spires EP connecté à un circuit d'alimentation en courant alternatif CA2 connecté au connecteur électrique PC, éventuellement via un module de conversion de fréquence MCF, et les premiers moyens d'alimentation électrique MA1 peuvent par exemple comprendre un enroulement secondaire de spires ES destiné à être placé en face de l'enroulement primaire EP et connecté à un circuit de chargement électrique CC1.

Ce circuit de chargement électrique CC1 est alors connecté à un module de conversion MC1 chargé de convertir le courant alternatif, issu du circuit de chargement électrique CC1, en un courant continu destiné à alimenter au moins le module de filtrage et d'amplification MFA1.

On notera, comme illustré sur la figure 1, que le répéteur externe RE peut éventuellement comprendre une batterie BA alimentée en courant continu par le module de conversion MC1. Cette batterie BA est alors destinée à fournir du courant continu au répéteur externe RE au moins en cas de panne de secteur.

Afin d'optimiser le transfert d'énergie entre les enroulements primaire EP et secondaire ES, on peut jouer sur plusieurs paramètres, comme cela est notamment expliqué dans le document de F. Costa « Transmission d'énergie à distance », Energie portable : autonomie et intégration dans l'environnement humain », 21-22 mars 2002 - Cachan - Journées Electrotechniques du Club EEA.

Cela résulte du fait que la puissance énergétique P transférée de l'enroulement primaire EP vers l'enroulement secondaire ES est donnée par la relation P = *µ*₀. ω. (S/2.e). I², où µ₀ est la permittivité diélectrique au sein de la paroi PA (par exemple de l'air dans le cas d'une vitre), w est la pulsation du courant alternatif (fonction de la fréquence (par exemple égale à 50 Hz)), S est la surface occupée par l'enroulement secondaire ES (définie par son diamètre 2A), e est l'épaisseur de la paroi PA (par exemple égale à 1 ou 2 cm dans le cas d'une vitre), et I est l'intensité du courant alternatif qui circule dans les enroulements (I = N₂.I₂, où N₂ est le nombre de spires de l'enroulement primaire EP).

Ainsi, on peut jouer sur le rapport entre les diamètres externes respectifs des enroulements primaire EP et secondaire ES. On peut en effet augmenter la puissance énergétique transférée P (définie par la relation donnée ci-dessus) en utilisant un enroulement primaire EP présentant un diamètre externe (égal à 2B) inférieur à celui (égal à 2A) de l'enroulement secondaire ES. Cela permet à l'enroulement secondaire ES d'intercepter le plus possible du flux magnétique qui est induit par l'enroulement primaire EP.

En variante ou en complément, on peut augmenter la puissance énergétique transférée P (définie par la relation donnée ci-dessus) en augmentant la pulsation ω (et donc la fréquence) du courant alternatif qui alimente l'enroulement primaire EP au moyen du module de conversion de fréquence MCF.

En variante ou en complément, on peut augmenter la puissance énergétique transférée P (définie par la relation donnée ci-dessus) en implantant des moyens de concentration de flux CP (voir figure 6), comme par exemple un noyau de fer, dans l'environnement des enroulements primaire EP et secondaire ES.

En variante ou en complément, on peut augmenter la puissance énergétique transférée P (définie par la relation donnée ci-dessus) en augmentant l'intensité I du courant circulant dans l'enroulement primaire EP, ce qui peut se faire en utilisant un nombre élevé de spires N₂ dans l'enroulement primaire EP.

Le répéteur externe RE et le répéteur interne RI peuvent être réalisés de façon compacte et peu encombrante, par exemple en réalisant tout ou partie de leurs constituants en des endroits choisis de cartes à circuits imprimés ou intégrés, et notamment leur module de filtrage et d'amplification (MFA1 ou MFA2), leur antenne de couplage (C1 ou C2), et leurs éventuels moyens d'alimentation par couplage inductif (ES ou EP). On peut également, comme illustré sur la figure 6, regrouper dans un ensemble (E1 ou E2) tous les constituants électriques ou électroniques de chaque répéteur interne (RI) ou externe (RE), hormis ses éventuels moyens d'alimentation par couplage inductif (ES ou EP).

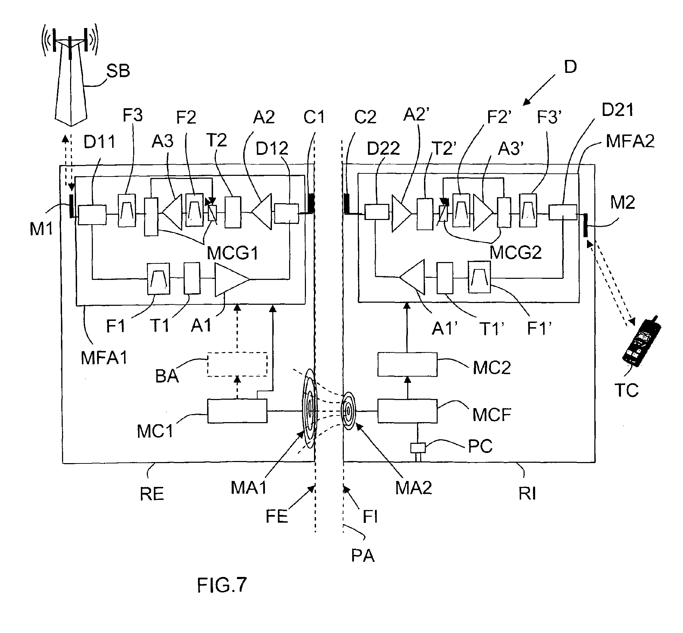

Afin de renforcer (ou d'instaurer) l'isolation radioélectrique des différentes antennes (M1, M2, C1 et C2), on peut, comme illustré sur la variante de réalisation de la figure 7, mettre en oeuvre dans les répéteurs externe RE et interne RI une technique de transposition (ou conversion) de fréquences. Il s'agit plus précisément :
- de modifier (ou convertir) la fréquence FR1 (par exemple égale à 2,140 GHz) des signaux RF qui ont été reçus par les premiers moyens d'émission/réception M1 en une fréquence FR3 (par exemple égale à 500 MHz) avant de les communiquer aux premiers moyens de couplage C1,
- de modifier (ou convertir) la fréquence FR2 (par exemple égale à 1,950 GHz) des signaux RF qui ont été reçus par les seconds moyens d'émission/réception M2 en une fréquence FR4 (par exemple égale à 200 MHz) avant de les communiquer aux seconds moyens de couplage C2,
- de re-modifier (ou reconvertir) la fréquence FR3 des signaux RF qui ont été transférés aux seconds moyens de couplage C2 (via les premiers moyens de couplage C1) pour la ramener à la fréquence FR1 avant de les communiquer aux seconds moyens d'émission/réception M2, et
- de re-modifier (ou reconvertir) la fréquence FR4 des signaux RF qui ont été transférés aux premiers moyens de couplage C1 (via les seconds moyens de couplage C2) pour la ramener à la fréquence FR2 avant de les communiquer aux premiers moyens d'émission/réception M1.

Ainsi, les différentes antennes d'émission et/ou de réception M1 et M2 et les différentes antennes de couplage électromagnétique C1 et C2 ne peuvent pas se perturber les unes les autres.

Pour parvenir au résultat escompté, on peut, comme illustré sur la figure 7 à titre d'exemple non limitatif :
- intercaler un premier convertisseur (ou transposeur) de fréquence T1 entre la sortie du premier filtre F1 et l'entrée du premier amplificateur A1, dans la branche descendante du module de filtrage et d'amplification MFA1 du répéteur externe RE. Ce premier convertisseur T1 est alors chargé de convertir la fréquence FR1 (par exemple égale à 2,140 GHz) en une fréquence FR3 (par exemple égale à 500 MHz),
- intercaler un premier convertisseur (ou transposeur) de fréquence T1' entre la sortie du premier filtre F1' et l'entrée du premier amplificateur A1', dans la branche montante du module de filtrage et d'amplification MFA2 du répéteur interne RI. Ce premier convertisseur T1 est alors chargé de convertir la fréquence FR2 (par exemple égale à 1,950 GHz) en une fréquence FR4 (par exemple égale à 200 MHz),
- intercaler un second convertisseur (ou transposeur) de fréquence T2 entre la sortie du deuxième amplificateur A2 et l'entrée du variateur de gain MCG1, dans la branche montante du module de filtrage et d'amplification MFA1 du répéteur externe RE. Ce second convertisseur T2 est alors chargé de re-convertir la fréquence FR3 en la fréquence FR1, et
- intercaler un second convertisseur (ou transposeur) de fréquence T2' entre la sortie du deuxième amplificateur A2' et l'entrée du variateur de gain MCG2, dans la branche descendante du module de filtrage et d'amplification MFA2 du répéteur interne RI. Ce second convertisseur T2' est alors chargé de re-convertir la fréquence FR4 en la fréquence FR2.

Dans ce qui précède on a décrit un exemple de mise en oeuvre de l'invention dans le cas de transmissions radio (bidirectionnelles) au sein d'un réseau cellulaire. Mais, lorsque les transmissions concernent des émetteurs de télévision ou de radio (hautes fréquences), elles sont de type monodirectionnel, c'est-à-dire d'une station émettrice de télévision (ou de radio) vers des récepteurs de télévision (ou de radio) implantés dans un espace entouré de parois. Dans ce cas, le dispositif répéteur D selon l'invention peut être simplifié, notamment au niveau de ses modules de filtrage et d'amplification MFA1 et MFA2. En effet, ces derniers n'ont plus besoin que d'une seule branche de traitement de type descendante, mettant éventuellement en oeuvre la technique de transposition de fréquence présentée ci-avant, sans les duplexeurs. De plus, l'élément référencé M1 dans le répéteur externe RE n'a besoin que d'être un moyen de réception de signaux RF et l'élément référencé M2 dans le répéteur interne RI n'a besoin que d'être un moyen d'émission de signaux RF.

On notera que l'invention permet d'éviter une éventuelle augmentation du nombre, ou une redistribution, des points de concentration et de gestion de la capacité dans le réseau que sont les contrôleurs de stations de base.

L'invention ne se limite pas aux modes de réalisation de dispositif répéteur décrits ci-avant, seulement à titre d'exemple, mais elle englobe toutes les variantes que pourra envisager l'homme de l'art dans le cadre des revendications ci-après.

## Revendications

1. Dispositif (D) répéteur de signaux radiofréquences (RF) devant être échangés entre une station (SB) d'un réseau de communication radio et un terminal de communication (TC) situé dans un espace entouré de parois, **caractérisé en ce qu'**il comprend un répéteur externe (RE) propre à être placé sur une face externe (FE) d'une paroi (PA) et comprenant des premiers moyens de couplage électromagnétique (C1) couplés à des premiers moyens d'émission et/ou de réception de signaux RF (M1), et un répéteur interne (RI) propre à être placé sur une face interne (FI) de ladite paroi (PA) sensiblement en face dudit répéteur externe (RE) et comprenant des seconds moyens de couplage électromagnétique (C2) couplés à des seconds moyens d'émission et/ou de réception de signaux RF (M2), lesdits premiers (C1) et seconds (C2) moyens de couplage électromagnétique étant agencés pour se transférer par voie d'ondes, au travers de ladite paroi (PA), des signaux RF provenant respectivement des premiers (M1) et seconds (M2) moyens d'émission et/ou de réception de signaux RF.

2. Dispositif selon la revendication 1, **caractérisé en ce que** lesdits premiers (C1) et seconds (C2) moyens de couplage électromagnétique sont agencés sous la forme d'antennes RF sensibles au champ électrique.

3. Dispositif selon la revendication 2, **caractérisé en ce que** lesdites antennes RF (C1, C2) sont choisies dans un groupe comprenant au moins les antennes de type monopôle, les antennes de type dipôle et les antennes de type microstrip.

4. Dispositif selon la revendication 1, **caractérisé en ce que** lesdits premiers (C1) et seconds (C2) moyens de couplage électromagnétique sont agencés sous la forme d'antennes sensibles au champ magnétique.

5. Dispositif selon la revendication 1, **caractérisé en ce que** lesdits premiers (C1) et seconds (C2) moyens de couplage électromagnétique sont agencés sous la forme d'émetteurs et/ou de récepteurs de signaux optiques.

6. Dispositif selon l'une des revendications 1 à 5, **caractérisé en ce que** ledit répéteur externe (RE) comprend des premiers moyens d'alimentation électrique (MA1), et ledit répéteur interne (RI) comprend des seconds moyens d'alimentation électrique (MA2) connectés à une source de courant alternatif et propres à transférer de l'énergie d'alimentation auxdits premiers moyens d'alimentation électrique (MA1), par couplage inductif.

7. Dispositif selon la revendication 6, **caractérisé en ce que** lesdits seconds moyens d'alimentation électrique (MA2) comprennent un enroulement primaire de spires (EP) connecté à un circuit d'alimentation en courant alternatif (CA2), et lesdits premiers moyens d'alimentation électrique (MA1) comprennent un enroulement secondaire de spires (ES) propre à être placé en face dudit enroulement primaire (EP) et connecté à un circuit de chargement électrique (CC1) agencé pour délivrer un courant alternatif.

8. Dispositif selon la revendication 7, **caractérisé en ce que** ledit enroulement primaire (EP) présente un diamètre inférieur audit enroulement secondaire (ES).

9. Dispositif selon l'une des revendications 7 et 8, **caractérisé en ce que** lesdits premiers (MA1) et/ou seconds (MA2) moyens d'alimentation électrique comprennent des moyens de concentration de flux (MCF).

10. Dispositif selon l'une des revendications 8 à 9, **caractérisé en ce que** lesdits seconds moyens d'alimentation électrique (MA2) comprennent des moyens de conversion (MCF) agencés pour convertir un courant alternatif présentant une première fréquence en un courant alternatif présentant une seconde fréquence supérieure à la première fréquence.

11. Dispositif selon l'une des revendications 8 à 10, **caractérisé en ce que** lesdits seconds moyens d'alimentation électrique comprennent un nombre élevé de spires.

12. Dispositif selon l'une des revendications 1 à 5, **caractérisé en ce que** ledit répéteur externe (RE) comprend des premiers moyens d'alimentation électrique (MA1) autonomes.

13. Dispositif selon la revendication 12, **caractérisé en ce que** lesdits premiers moyens d'alimentation électrique (MA1) comprennent une cellule solaire et un circuit de chargement électrique connecté à ladite (auxdites) cellule(s) solaire(s) et agencé pour délivrer un courant continu.

14. Dispositif selon l'une des revendications 6 à 13, **caractérisé en ce que** lesdits premiers moyens d'alimentation électrique (MA1) comprennent une batterie (BA) connectée audit circuit de chargement électrique (CC1).

15. Dispositif selon l'une des revendications 6 à 14, **caractérisé en ce que** lesdits premiers (MA1) et/ou seconds (MA2) moyens d'alimentation électrique comprennent des moyens de conversion (MCC1, MCC2) agencés pour convertir un courant alternatif en un courant continu.

16. Dispositif selon l'une des revendications 1 à 15, **caractérisé en ce que** ledit répéteur externe (RE) comprend des premiers moyens de conversion de fréquence (T1) agencés pour convertir une première fréquence présentée par les signaux RF reçus par lesdits premiers moyens d'émission et/ou de réception (M1) en une troisième fréquence avant de communiquer lesdits signaux RF auxdits premiers moyens de couplage électromagnétique (C1), et **en ce que** ledit répéteur interne (RI) comprend des seconds moyens de conversion de fréquence (T2') agencés pour convertir ladite troisième fréquence présentée par les signaux RF transférés auxdits seconds moyens de couplage électromagnétique (C2), via lesdits premiers moyens de couplage électromagnétique (C1), pour la ramener à la première fréquence avant de les communiquer auxdits seconds moyens d'émission et/ou de réception (M2).

17. Dispositif selon l'une des revendications 1 à 16, **caractérisé en ce que** ledit répéteur interne (RI) comprend des premiers moyens de conversion de fréquence (T1') agencés pour convertir une deuxième fréquence présentée par les signaux RF reçus par lesdits seconds moyens d'émission et/ou de réception (M2) en une quatrième fréquence avant de communiquer lesdits signaux RF auxdits seconds moyens de couplage électromagnétique (C2), et **en ce que** ledit répéteur externe (RE) comprend des seconds moyens de conversion de fréquence (T2) agencés pour convertir ladite quatrième fréquence présentée par les signaux RF transférés auxdits premiers moyens de couplage électromagnétique (C1), via lesdits seconds moyens de couplage électromagnétique (C2), pour la ramener à la deuxième fréquence avant de les communiquer auxdits premiers moyens d'émission et/ou de réception (M1).
